# EUROPÄISCHE PATENTSCHRIFT

(11) **EP 2 302 238 B1**
(45) Veröffentlichungstag und Bekanntmachung des Hinweises auf die Patenterteilung: **27.06.2012**
(21) Anmeldenummer: 10173387.1
(22) Anmeldetag: 19.08.2010
(51) Int. Cl.: F16C 13/02, F16C 33/10

(54) **Transportvorrichtung, insbesondere für eine Pressvorrichtung zur Herstellung von Spanplatten**
Transport device, in particular for a pressing device used to produce chipboards
Dispositif de transport, notamment pour un dispositif de pressage pour la fabrication de panneaux de particules

(30) Priorität: 29.09.2009 DE 102009043434
(43) Veröffentlichungstag der Anmeldung: 30.03.2011
(73) Patentinhaber: Schaeffler Technologies AG & Co. KG, 91074 Herzogenaurach (DE)
(72) Erfinder: Kleber, Rainer, 66386, St. Ingbert (DE); Vogelgesang, Christian, 66459, Kirkel (DE); Windrich, Jürgen, 69181, Leimen (DE); Braun, Wolfgang, 97493, Bergrheinfeld (DE); Duppe, Carsten, 97273, Kürnach (DE)

(56) Entgegenhaltungen:
- WO-A1-95/19309
- DE-A1-102006 051 332
- US-A- 1 425 561
- US-A- 4 029 200
- US-A- 4 903 820
- US-A1- 2008 247 687

## Beschreibung

### Gebiet der Erfindung

Die Erfindung betrifft eine Transportvorrichtung, insbesondere für eine Pressvorrichtung zur Herstellung von Spanplatten, umfassend eine Anzahl an Tragrollen, wobei jede Tragrolle an zwei Bolzen, die in Halterungen der Transportvorrichtung fixiert sind und in jeweils eine an den Stirnseiten der Tragrollen vorgesehene sacklochartige Bohrung eingreifen, über eine Gleitlagerung mit rollen- und bolzenseitig vorgesehenen Laufflächen drehgelagert ist

### Hintergrund der Erfindung

Transportvorrichtungen dieser Art sind zur Herstellung von Spanplatten an und für sich bekannt. Auf ihnen wird der in entsprechenden Pressvorrichtungen zu Spanplatten zu verpressende Spankuchen, bestehend im Wesentlichen aus einem Spangemisch und verschiedenen Zusatzstoffen, wie z. B. Leim, durch eine kontinuierliche Presse gefördert. Der weitere Aufbau einer solchen Anlage besteht im Wesentlichen aus zwei sich bewegenden Stahlbändern, zwischen denen sich der, gegebenenfalls vorgepresste, Spankuchen befindet, auf den Stahlbändern angeordneten Tragrollen, einem Heizplattensystem sowie statischen Presszylindern. Die Tragrollen reichen über die gesamte Pressplattenbreite und befinden sich zwischen den statischen Presszylindern und den sich bewegenden Stahlbändern. Die Tragrollen umfassen Bohrungen zur Aufnahme von Bolzen, wobei die Bolzen an Halterungen der Transportvorrichtung befestigt sind. Die Tragrollen dienen im Allgemeinen der Reduzierung von Reibungseffekten, die zwischen den statischen Presszylindern bzw. dem Heizplattensystem und den Stahlbändern auftreten. Durch den Eintrag von Druck und Temperatur bindet in der Presse der zugegebene Leim im Spankuchen ab und verdichtet das Spangemisch zu einer Spanplatte. Im Weiteren schießen sich an die so hergestellte Spanplatte weitere Fertigungsschritte an, wobei diese beispielsweise auf gewünschte Abmaße gesägt werden kann oder an der Oberflächen geschliffen wird etc..

Zwischen Tragrolle und in dieser aufgenommenem drehgelagertern Bolzen kommt es, insbesondere in Bereichen hoher Kantenpressung am Ausgang der Bohrung der Tragrolle, zu Reibungs- und Verschleißerscheinungen, welchen man, wie aus dem Stand der Technik bekannt, mit dem bolzenseitigen Aufbringen von Gleitbuchsen zur Reduzierung der Reibung begegnet. Eine Alternative oder Ergänzung hierzu ist eine Schmierung der reibaktiven Bereiche zwischen Tragrollenbohrung und Bolzen. Bezüglich des Einsatzes der genannten Messingbuchsen ist es hierbei jedoch problematisch, dass diese selbst einen gewissen Durchmesser aufweisen und somit Platz beanspruchen, welcher in den Bereichen, in denen eine Gleitbuchse vorgesehen ist, von dem Bolzendurchmesser abgezogen werden muss und insofern dessen Steifigkeit reduziert. Im Betrieb besteht zudem die Gefahr, dass die Gleitbuchsen durch auftretende Scherkräfte verschoben werden und ihre Betriebsposition auf dem Bolzen verlassen. Die Gleitbuchsen sind durch die erwähnt hohe Kantenpressung am Ausgang der tragrollenseitigen Bohrung einem erhöhten Verschleiß unterworfen.

Aus US 4,903,820 A ist eine Transportvorrichtung der eingangs genannten Art bekannt, wobei ein sich radial erweiternder Lagerkragen des Bolzens und eine rollenseitige Nut, in die der Lagerkragen eingreift, mit einer Gleitmittelbeschichtung versehen sind. Dabei weist die Transportvorrichtung zwischen dem Bolzen und der sacklochartigen Bohrung einen Spalt auf, in dem ein Fluid zirkulieren kann.

Aus US 1,425 561 A ist eine Transportvorrichtung bekannt, wobei jede Tragrolle an zwei Bolzen, die in Halterungen der Transportvorrichtung fixiert sind und in jeweils eine an den Stirnseiten der Tragrollen vorgesehene sacklochartige Bohrung eingreifen, über eine Gleitlagerung mit rollen- und bolzenseitig vorgesehenen Laufflächen drehgelagert ist.

### Aufgabe der Erfindung

Ausgehend davon ist es Aufgabe der Erfindung, eine Transportvorrichtung der gattungsgemäßen Art anzugeben, bei der zwischen Tragrolle und darin befindlichem Bolzen auftretende Reibungs- und Verschleißerscheinungen verringert werden.

### Zusammenfassung der Erfindung

Diese Aufgabe wird erfindungsgemäß durch eine Transportvorrichtung mit den Merkmalen des Oberbegriffs des Anspruchs 1 dadurch gelöst, dass die tragrollen- und/oder bolzenseitigen Laufflächen der Gleitlagerung komplett mit einem Gleitlack beschichtet sind, wobei am Bolzen eine erste Fase im Bereich seines freien Endes vorgesehen ist, oder am Bolzen eine zweite Fase im Bereich des aus der sacklochartigen Bohrung der Tragrolle herausragenden Bolzenabschnitts vorgesehen ist, oder an der Tragrolle im Eingangsbereich der sacklochartigen Bohrung eine Fase vorgesehen ist, wobei die Fase ebenfalls zumindest abschnittsweise mit Gleitlack beschichtet ist.

Zunächst ist festzustellen, dass durch den erfindungsgemäßen Einsatz eines eine Gleitschicht bildenden Gleitlacks, welcher sich komplett auf den tragrollen- und/oder bolzenseitigen Laufflächen befindet, ein Einsatz der oben genannten Gleitbuchsen, z. B. Messingbuchsen, erübrigt, woraus sich eine Vielzahl an Vorteilen ergibt. Zum einen kann hierdurch die Bolzensteifigkeit erhöht werden, da der Bolzen nicht mehr in den Bereichen, an denen vormals die Gleitbuchsen angeordnet waren, in seinem Durchmesser reduziert werden muss, vielmehr liegt er als eine Art Vollstab vor. Die rein als reibungsmindemde Maßnahme zu verstehende auf den Bolzen aufgebrachte Gleitbuchse verbessert zwar einerseits das Reibungsverhalten des Bolzens, nimmt dem Bolzen aber andererseits an mechanischer Stabilität. Somit kann durch den Entfall der Gleitbuchse der Bolzen insgesamt stabiler ausgeführt werden. Der erfindungsgemäß auf den Laufflächen des Bolzen und/oder der Tragrolle eingesetzte Gleitlack kann ein Standardprodukt sein, besonders bevorzugt wird jedoch ein spezieller Gleitlack verwendet der in einer Matrix fein verteilte Schmier- und Verschleißschutzstoffe in Form von Feststoffpartikeln enthält.

Als mögliche Matrizen der Gleitlackzusammensetzung kommen beispielsweise und nicht abschließend in Frage:
- Standardgleitlacke (wie z. B. Molykote® D708 (Handelsname), Hersteller: Dow Corning, Fluoropan 340 AB (Handelsname), Hersteller: Klüber),
- reine Basislacke für UV-, IR-, NIR- oder strahlenaushärtend, wie Acrylharze, Alkydharz, Urethan modifiziertes Alkydharz, Polyurethan-/Acrylat-Dispersionen oder Epoxidharze und dessen Mischungen. Speziell für UVaushärtende Basislacke können Polyether-/Polyesteracrylate, Epoxidacrylate, Urethanacrylate und Dual-Cure-Systeme verwendet werden,
- für hitze- und/oder strahlenhärtbare Basislacke eignen sich besonders Phenolharze, Acrylatharze, Epoxyharze, Polyesterharze, Melaminharze, Aminoplaste, Polyurethane sowie Mischungen aus diesen Komponenten,
- eine wässrige Polyetheretherketon-Dispersion,
- alle Polymere, welche als Schmierstoffsystem genannt wurden, wie Polytetrafluorethyle, Perfluorpropylvinylether, Polyamidimid, Perfluormethylvinylether, Ethylen-Chlortrifluorethylen, Polyvinylidenfluorid, Polyphthalamid, Polyetheretherketon und dessen Mischungen.

Als mögliche Schmierstoffe kommen beispielsweise und nicht abschließend in Frage:
- Polytetrafluorethylen - Pulverpartikel,
- Graphit und oder Kugelgraphit - Pulverpartikel,
- Molybdänsulfid - Pulverpartikel,
- Perfluorpropylvinylether - Pulverpartikel,
- Polyamidimid - Pulverpartikel,
- lösliche Polyamide, z. B. alle in Alkohol löslichen Polyamide und Copolyamide, besonders vorteilhaft ist N-methoxymethyliertes Polyamid katalytisch beschleunigt mit organischen Säuren,
- Perfluormethylvinylether - Pulverpartikel,
- Ethylen-Chlortrifluorethylen - Pulverpartikel,
- Polyvinylidenfluorid - Pulverpartikel,
- Polyphthalamid - Pulverpartikel,
- Polyetheretherketon - Pulverpartikel.

Natürlich können auch andere Schmierstoffe bzw. Mischungen daraus verwendet werden.

Als mögliche Verschleißschutzstoffe kommen beispielsweise und nicht abschließend in Frage:
- eine kolloidale Dispersion von hexagonalen Bornitrid - Partikeln in einem Polytetrafluorethylen - Mantel (wie z. B. CERFLON® (Handelsname)),
- Bornitrid - Partikel (wie z. B. Combat® BN (Handelsname)),
- Siliciumoxid - Partikel,
- Wollastonit - Partikel,
- Zirkoniumoxid - Partikel,
- Siliciumnitrid - Partikel,
- Aluminiumoxid - Partikel,
- Zinkoxid - Partikel,
- Zinksulfid - Partikel,
- Titanoxid - Partikel,
- Metallcarbid - Partikel,
- Wolframcarbid - Partikel,
- Borcarbid - Partikel,
- Titancarbid - Partikel,
- Siliciumcarbid - Partikel,
- Siliciumnitridpulver aus folgenden Komponenten bestehend: Siliciumnitrid min. 97,0 Gew.%, Silicium max. 0,3 Gew.%, Kohlenstoff max. 0,3 Gew.%, Eisen max. 0,1 Gew.% Partikel,
- Fullerene der Summenformeln C60, C70, C76, C80, C82, C84, C86, C90 und C94,
- Kohlenstoffnanoröhren,
- Kohlenstofffasern.

Natürlich können auch andere Verschleißschutzstoffe bzw. Mischungen daraus verwendet werden.

Die Partikelgrößen der Schmier- bzw. Verschleißschutzstoffe liegen vorzugsweise in einem Bereich von 0,1 nm - 20 µm. Natürlich sind auch größere oder kleinere Partikelgrößen denkbar. Ihr Gesamtvolumenanteil am Gleitlack liegt nicht über 90 Vol.-%. Innerhalb dieses Intervalls sind sämtliche Zusammensetzungen möglich.

Sowohl Schmier- als auch Verschleißschutzstoffe können zur besseren Einbindung in die Matrix mit einer oberflächenmodifizierten Oberfläche vorliegen. Hierzu kommt insbesondere eine Silanisierung der jeweiligen Partikeloberflächen zur Anwendung.

Im Vergleich zu gängigen Gleitlacken oder sonstigen Schmierstoffen weist dieser Gleitlack deutlich verbesserte tribologische Eigenschaften hinsichtlich Reibung und Verschleiß auf, so sind mit diesem beispielsweise Trockenreibwerte bis unter 0,3 zu verwirklichen.

Der Gleitlack ist über gängige Beschichtungsverfahren, wie z. B. Aufsprühen, Tauchen oder Aufstreichen, auf die tragrollen- und/oder bolzenseitigen Laufflächen aufbringbar. Erfindungsgemäß sind die tragrollen- und/oder bolzenseitigen Laufflächen komplett mit dem Gleitlack beschichtet. Es ist ferner denkbar, den gesamten Bolzen zu beschichten, wenn hierfür ein geeignetes Beschichtungsverfahren, wie z. B. eine Tauchlackierung, aus wirtschaftlichen Gründen Vorteile verspricht.

Es ergibt sich erfindungsgemäß somit ein optimiertes System aus Tragrolle und Bolzen, welches sich durch verbessertes Reib- und Verschleißverhalten sowie einen hinsichtlich seiner mechanischen Eigenschaften verbesserten Bolzen auszeichnet. Hieraus lassen sich weitere positive Effekte wie z. B. eine Erhöhung der Lebensdauer ableiten. Es ist nachvollziehbar, dass es sich erfindungsgemäß nicht zwangsläufig um eine Transportvorrichtung für eine Pressvorrichtung zur Herstellung von Spanplatten handeln muss, vielmehr sind auch sämtliche andere Transportvorrichtungen umfassend einen gemäß dem Oberbegriff in einer Tragrolle gleitgelagerten Bolzen aus anderen technischen Bereichen, welche Reibung und Verschleiß unterworfen sind, von der Erfindung erfasst.

Die Schichtdicke des auf die tragrollen- und/oder bolzenseitigen Laufflächen aufgebrachten Gleitlacks liegt vorteilhafterweise in einem Bereich von 10 - 300 µm und in besonders vorteilhafter Ausführung bei ca. 25 - 75 µm, insbesondere ca. 50 µm. Natürlich sind hiervon alle Intervalle, die sich innerhalb des oben Genannten ergeben können, als erfindungswesentlich offenbart. In besonderen Anwendungsfällen kann es auch sein, dass eine besonders dicke Gleitlackschicht mit einer Schichtdicke von mehr als 300 µm oder eine besonders dünne Gleitlackschicht mit einer Schichtdicke von weniger als 10 µm Verwendung findet. Es ist grundsätzlich davon auszugehen, dass die Schichtdicke des Gleitlacks entsprechend einer konkreten Anwendung auszuwählen ist, wobei hier viele Faktoren, wie beispielsweise das Betriebsspiel des Bolzens in der Bohrung oder die auf Tragrolle und Bolzen einwirkenden Kräfte, eine Rolle spielen. In einer vorteilhaften Ausführungsform der Erfindung ist der Bolzen so konzipiert, dass er im Bereich seiner Laufflächen in seinem Durchmesser vergrößert ist. Dadurch erhält der Bolzen in diesen besonders beanspruchten Bereichen ein zusätzliches Maß an mechanischer Stabilität, um Belastungserscheinungen wie z. B. Biegung standzuhalten. Hinsichtlich der Übergänge von den Laufflächen mit einem erhöhten Bolzendurchmesser zu den Bolzenabschnitten am Grundbolzen mit geringerem Durchmesser sind konstruktiv keinerlei Grenzen gesetzt. Es können hierbei verschiedenste Geometrien eingesetzt werden. So sind unterschiedliche Fasen, aber auch konvex oder konkav gewölbte bzw. gerundete Übergänge oder reine Kanten denkbar. Es ist auch nicht unbedingt erforderlich, dass die Übergänge von Lauffläche zu Grundbolzen symmetrisch an den Enden der Laufflächen vorliegen, es kann auch sein, dass an einem Ende einer Lauffläche z. B. eine Fase vorgesehen ist, und am anderen eine reine Kante.

In einer weiteren Ausführungsform der Erfindung ist es vorgesehen, im Bereich des freien Bolzenendes eine erste Fase anzubringen. Diese Fase kann je nach Anforderung mit beliebigem Winkel versehen sein, wobei der Grundsatz gilt, einen möglichst kleinen Winkel auszuwählen. Die Übergänge der Fasen zu den jeweiligen an diese ansetzenden Abschnitte können beliebig ausgebildet sein. So sind z. B. durch eine entsprechende Abrundung der Fasenenden sanfte Übergänge von der Fase zu dem an diese angrenzenden Abschnitt möglich. Über die Einbringung der ersten Fase ist es möglich, die Kantenpressung am freien Ende des Bolzens in der Bohrung der Tragrolle im Belastungsfall zu reduzieren, wie prinzipiell im Weiteren näher erläutert wird.

In einer besonders vorteilhaften Ausführung der Erfindung ist es vorgesehen, gegebenenfalls zusätzlich zu der ersten Fase, eine zweite Fase im Bereich des aus der sacklochartigen Bohrung der Tragrolle herausragenden Bolzenabschnitts anzubringen. In diesem Abschnitt ist der Bolzen einer besonders hohen Kantenpressung ausgesetzt, welche dadurch reduziert werden kann, dass man den Bolzen in diesem Bereich mit einer Fase versieht. Im unbelasteten Zustand von Tragrolle und Bolzen bildet sich demnach in diesem Bereich ein Spalt zwischen Bolzen und Bohrung der Tragrolle aus, dessen Größe und Geometrie im Wesentlichen durch den Fasenwinkel gegeben ist. Im Belastungsfall, das heißt, es wirkt eine Presskraft senkrecht zur Achsenebene der Tragrolle bzw. des Bolzens auf Tragrolle und Bolzen, wird die Kantenpressung zwischen Tragrolle und Bolzen im Vergleich reduziert, da es nicht gleich zu einem Verkanten kommt, sondern zunächst durch die Biegung des Bolzens bzw. der Tragrolle der Spalt überwunden wird und es erst bei weiterer Durchbiegung von Bolzen und Tragrolle zu einer Berührung kommt. Entsprechend der ersten Fase können die Übergänge der zweiten Fase beliebig gestaltet sein.

In einer weiteren, besonders vorteilhaften Ausführungsform der Erfindung ist, gegebenenfalls zu den ersten und/oder zweiten Fasen am Bolzen, an der Tragrolle im Eingangsbereich der sacklochartigen Bohrung eine der zweiten Fase des Bolzens entgegengesetzte Fase vorgesehen. Dadurch kann entsprechend den obigen Ausführungen das Maß an Kantenpressung im Belastungsfall weiter vermindert werden, da zunächst ein Spalt, in dieser Ausführungsform sich erstreckend über den Eingangsbereich der sacklochartigen Bohrung der Tragrolle und sich ergebend durch die hier angebrachte Fase, durch Verbiegen der Tragrolle und/oder des Bolzens überwunden werden muss. Bei Vorhandensein der bolzenseitig angeordneten zweiten Fase ist dieser Effekt verstärkt, da der Spaltraum vergrößert vorliegt, und es noch später, das heißt bei noch größerer Verbiegung von Tragrolle und/oder Bolzen, zu einer Berührung zwischen Tragrolle und Bolzen kommt. Analog zu der ersten oder zweiten Fase am Bolzen kann auch die Fase an im Eingangsbereich der sacklochartigen Bohrung der Tragrolle hinsichtlich ihrer Übergänge beliebig gestaltet sein.

Natürlich können auch alle Fasen mit dem Gleitlack wenigstens abschnittsweise beschichtet sein.

Besonders vorteilhaft ist es, die Fasenwinkel möglichst klein zu halten, wobei hier ein Bereich von 2 bis 10°, vorzugsweise 5 ± 2°, angestrebt wird. Natürlich sind auch größere oder kleinere Fasenwinkel realistisch.

In einer weiteren vorteilhaften Ausführungsform der Erfindung sind die Übergänge der Fasen am Bolzen mit einem Radius von 20 bis 40 mm, vorzugsweise ca. 30 mm, gewölbt ausgeformt. Durch die Wölbung bzw. Abrundung der Fasenübergänge ergibt sich ein noch sanfterer Übergang, welcher zur Reduzierung der Kantenpressung einen weiteren Beitrag leistet. Selbstverständlich sind die erwähnten Radien nicht abschließend, vielmehr ist hierbei entsprechend einer konkreten Ausgestaltung des Bolzens und der diesen aufnehmenden Bohrung der Tragrolle diesbezüglich eine Festlegung zu treffen.

In einer weiteren Ausführungsform der Erfindung weist die Oberfläche der Bohrungen der Tragrollen einen Rauhigkeitswert Rₐ von 0,1 - 10 µm, vorzugsweise von weniger als 4 µm, auf. Die von Haus aus glatter ausgeführte Oberfläche der Bohrung der Tragrolle leistet ebenso einen Beitrag zur Reibungs- und Verschleißreduzierung des Gesamtsystems aus Tragrolle und darin drehgelagertem Bolzen. Somit wird schon bei entsprechend glatter Ausführung der Bohrung der Tragrolle das Reibungs- und Verschleißverhalten optimiert.

In einer zusätzlichen erfindungsgemäßen Ausführungsform sind die Halterungen der Transportvorrichtung starr an einem Rahmengestell oder an einem umlaufenden Fördermittel, insbesondere einer Kette, vorgesehen. Typische Anwendungsfälle, wie die eingangs genannten, erfordern mithin eine fortschreitende, also bewegbare, Führung der in den Halterungen der Transportvorrichtung fixierten Bolzen und somit der Tragrollen im Sinne eines Förderbands, welche derart bereitgestellt wird, dass die Halterungen ihrerseits an ein umlaufendes Fördermittel, welches vorzugsweise in Form einer Kette vorliegt und entlang eines Traggestells läuft, angebunden sind. Neben der Kette sind von der Erfindung natürlich auch alle anderen umlaufenden Fördermittel, wie beispielsweise Bänder oder dergleichen, betroffen. Alternativ dazu können die Halterungen der Transportvorrichtung auch starr an einem Rahmengestell angeordnet sein.

Bei den Bolzen und Tragrollen handelt es sich jeweils um Bauteile aus einem metallischen Werkstoff. Gattungsgemäße Transportvorrichtungen werden im Allgemeinen mit hohen Kräften beaufschlagt und stehen unter sehr hohen Belastungen. Insofern kommt hierfür eine Ausführung aus einem entsprechenden metallischen Werkstoff in Betracht, wie z. B. speziellen Einsatz- oder Vergütungsstählen, wobei diese oberflächlich hohen Härten und in ihrem Inneren hohe Zähigkeiten, was insgesamt zu hoch verschleißfesten Materialien führt, aufweisen. Natürlich sind auch entsprechende metallische Werkstoffe auf Basis anderer Metalle, wie z. B. Titan, für die Ausführung der Tragrollen bzw. der darin drehgelagerten Bolzen denkbar. Es ist im Rahmen der Erfindung auch nicht vorgegeben, dass sich Tragrolle und Bolzen in ihrem jeweiligen metallischen Werkstoff gleichen bzw. identisch sind, diese können sich in Extremfällen auch unterscheiden, wobei hier Acht darauf zu legen ist, dass sich zumindest zwischen den Härten der Oberflächen der Materialien kein zu großer, einen Verschleiß bedingender, Unterschied ergibt.

### Kurze Beschreibung der Zeichnungen

Ein Ausführungsbeispiel der Erfindung ist in der Zeichnung dargestellt und wird im Folgenden näher beschrieben. Es zeigen:
- Figur 1: eine Prinzipdarstellung einer erfindungsgemäßen Transportvor- richtung als Ausschnitt,
- Figur 2: eine Prinzipdarstellung eines erfindungsgemäßen Bolzens,
- Figur 3: eine Prinzipdarstellung einer erfindungsgemäßen Tragrolle, und
- Figur 4: eine Prinzipdarstellung eines in einer sacklochartigen Bohrung einer Tragrolle über eine Gleitlagerung drehgelagerten Bolzens.

### Ausführliche Beschreibung der Zeichnungen

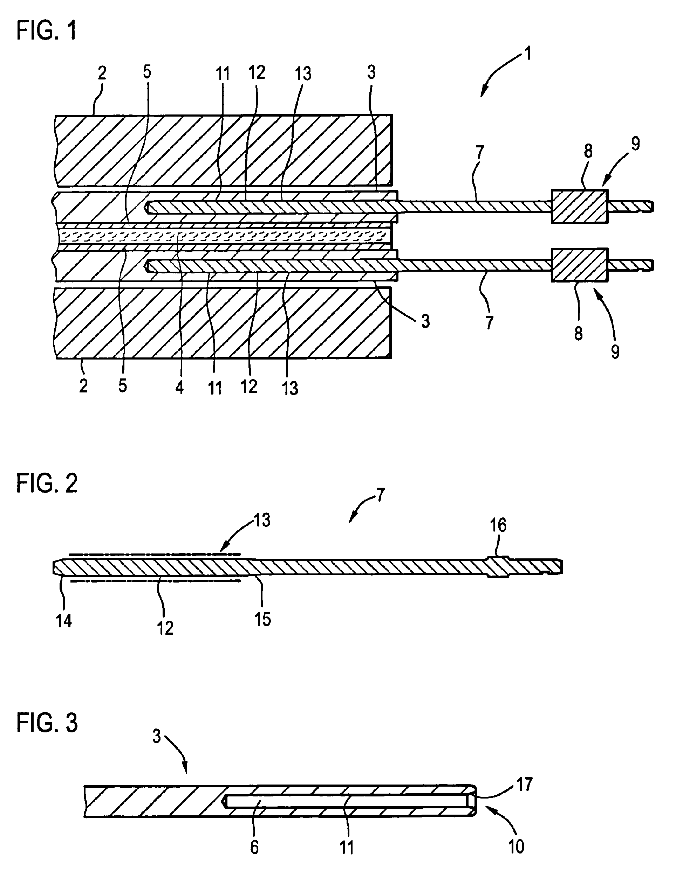

Figur 1 zeigt einen Ausschnitt einer erfindungsgemäßen Transportvorrichtung 1, wie sie bei der Herstellung von Spanplatten zum Einsatz kommt. Zwischen oben und unten liegenden beheizbaren Presszylindern 2 befinden sich zwei Tragrollen 3, die mit ihrer dem Spankuchen 4 zugewandten Seite jeweils an bewegbaren Stahlbändern 5 angeordnet sind. Die Stahlbänder 5 dienen zum Transport des Spankuchens durch die Anlage, wobei aus diesem durch Druck und Temperatureintrag und einem dadurch bedingten Abbinden des im Spankuchen 4 enthaltenen Leimes eine fertige Spanplatte erhalten wird. Diese kann im Anschluss entsprechend der Anforderung z. B. von Kunden auf ein festgelegtes Maß nachkonfektioniert werden. Figur 1 zeigt weiterhin in den Tragrollen 3 in einer sacklochartigen Bohrung 6 angeordnete Bolzen 7, welche in Halterungen 8 eines fortlaufenden Fördermittels 9, hier eine Kettenführung, angeordnet sind. Es ist ersichtlich, dass es innerhalb der sacklochartigen Bohrung 6 zwischen dieser und dem darin drehgelagerten Bolzen 7 zu Reibungs- und Verschleißerscheinungen kommt. Ferner ist erkennbar, dass es im Eingangsbereich der sacklochartigen Bohrung 10 an der Tragrolle 3 zu hohen Kantenpressungen zwischen Tragrolle 3 und Bolzen 7 kommt. Erfindungsgemäß ist es nun vorgesehen, auf die tragrollenseitigen und/oder bolzenseitigen Laufflächen 11, 12 einen Gleitlack 13 aufzubringen, welcher aufgrund seiner speziellen Zusammensetzung das Reibungs- und Verschleißverhalten der Tragrollen 3 und der darin befindlichen Bolzen 7 deutlich verbessert. Tragrolle 3 und Bolzen 7 sind hierbei aus einem metallischen Werkstoff, insbesondere einem Einsatzstahl.

Figur 2 zeigt eine Prinzipdarstellung eines erfindungsgemäßen Bolzens 7. Es ist zu erkennen, dass die bolzenseitigen Laufflächen 12 an Bolzenabschnitten mit einem vergrößerten Bolzendurchmesser vorgesehen sind. Durch die Ausführung der bolzenseitigen Laufflächen 12 mit einem vergrößerten Durchmesser kann eine erhöhte mechanische Stabilität des Bolzens 7 insbesondere im Bereich seiner Laufflächen 12 erreicht werden. Der Bolzen verfügt zudem im Bereich seines freien Endes über eine erste Fase 14 und im Bereich des aus der sacklochartigen Bohrung der Tragrolle 6 herausragenden Bolzenabschnitts, also dem Eingangsbereich der Bohrung 10 der Tragrolle 3, über eine zweite Fase 15. Die erste und die zweite Fase 14, 15 bedingen eine Reduzierung der Kantenpressung dadurch, dass sie einen Freiraum zwischen Tragrolle 3 und Bolzen 7, im Sinne eines Spalts, ausbilden, der bei Biegung, das heißt bei Belastung des Systems, zunächst überwunden werden muss. Die Gefahr eines Verkantens des Bolzens 7 in der Tragrolle 3 ist dadurch verringert. Die erste und die zweite Fase 14, 15 sind am Bolzen 7 mit einem Radius von 30 mm ausgeformt, wobei die Übergänge der Fasen 14, 15 abgerundet sind, was einem Verkanten des Bolzens 7 in der Tragrolle 3 weiter abträglich ist. Die Fasenwinkel der Fasen 14, 15 sind vergleichsweise gering und liegen bei 5°, wodurch die erwähnten sanften Übergänge möglich werden. An ihrem aus der Tragrolle 3 herausragenden Ende verfügen die Bolzen 7 über Halteabschnitte 16, die mit den an der Transportvorrichtung 1 vorgesehenen Halterungen 8 zusammenwirken. Es ist nun erfindungsgemäß vorgesehen, die bolzenseitigen Laufflächen 12 mit einem Gleitlack 13 komplett zu beschichten. Der Gleitlack 13 ist nicht als Standardgleitlack zu verstehen, sondern verfügt über eine spezielle Zusammensetzung, wonach in diesem sowohl Schmier- als auch Verschleißschutzstoffe enthalten sind. Die in einer Matrix enthaltenen Schmier- und Verschleißschutzstoffe können dabei durch eine Oberflächenmodifizierung, insbesondere eine Silanisierung, in besonders stabiler Weise in die Matrix eingebunden werden.

Figur 3 zeigt eine Prinzipdarstellung eines Schnittes durch eine erfindungsgemäße Tragrolle 3. In dieser befindet sich im Schnitt eine sacklochartige Bohrung 6, in welcher über eine Gleitlagerung ein Bolzen 7, hier nicht dargestellt, drehgelagert vorgesehen ist. Die Tragrolle 3 verfügt über Laufflächen 11, welche unter Zusammenwirken mit den bolzenseitigen Laufflächen 12, eine Gleitlagerung des Bolzens 7, wie beschrieben, ermöglichen. In der gezeigten Figur 3 sind die Laufflächen 11 der Tragrolle 3 nicht mit einem Gleitlack 13 beschichtet, dies ist jedoch durchaus möglich. Die sacklochartige Bohrung 6 ist derart ausgeführt, dass diese einen besonders niedrigen Rauigkeitswert Rₐ von 3 - 4 µm aufweist. Somit kann schon bei der Einbringung der sacklochartigen Bohrung 6 ein gewisser Beitrag zur späteren, vor allen Dingen im Zusammenbau relevanten, Reibungs- und Verschleißminderung geleistet werden. Im Eingangsbereich der sacklochartigen Bohrung 10 ist eine Fase 17 vorgesehen, deren Fasenwinkel 5° beträgt und deren Übergänge abgerundet ausgeführt sind. Die Tragrolle 3 ist aus einem Einsatzstahl gefertigt.

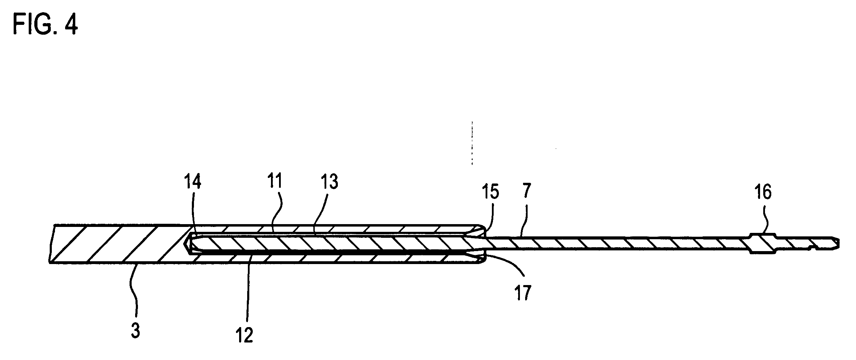

Figur 4 zeigt eine Prinzipdarstellung einer Tragrolle 3, in der ein Bolzen 7 über eine Gleitlagerung mit rollen- und bolzenseitig vorgesehenen Laufflächen 11, 12 drehgelagert ist. Hierbei befindet sich auf der bolzenseitigen Lauffläche 12 eine Schicht aus dem Gleitlack 13. Weiterhin sind die jeweiligen Fasen am Bolzen 14, 15 sowie die Fase 17 am Eingangsbereich der Bohrung 10 der Tragrolle 3 dargestellt. Gemäß Figur 4 bildet sich zwischen der zweiten Fase 15 am Bolzen 7 und der tragrollenseitig vorgesehenen Fase 17 ein keilartiger Freiraum bzw. Spalt aus, der bei Belastung von Tragrolle 3 und Bolzen 7 zu einer verminderten Kantenpressung führt, indem durch die Belastung nicht gleich ein Zusammenpressen der jeweiligen Abschnitte des Bolzens 7 und der Tragrolle 3 stattfindet, sondern zunächst dieser Spalt überwunden werden muss. Vergleichbares gilt im Übrigen auch für die am Bolzen 7 vorgesehene erste Fase 14, wobei sich hier ein in der Ansicht keilartiger Freiraum zwischen tragrollenseitiger Lauffläche 11 und der ersten Fase 14 ergibt.

Insgesamt ergibt sich durch die erfindungsgemäße Anordnung ein reibungs- und verschleißarmes System bestehend aus der Tragrolle 3 und dem Bolzen 7, wobei sich auf der bolzenseitigen Lauffläche 12 ein Gleitlack 13 befindet, der hier über eine Schichtdicke von 25 - 50 µm verfügt. Durch den Einsatz des Gleitlacks 13 ist eine, wie aus dem Stand der Technik bekannte, Verwendung von verschleißreduzierenden Maßnahmen, wie z. B. das Aufbringen von Messingbuchsen auf den Bolzen 7, nicht mehr notwendig. Insofern muss dieser an den entsprechenden Stellen nicht mehr in seinem Durchmesser reduziert werden, was insgesamt zu einer erhöhten Steifigkeit bzw. mechanischen Stabilität des Bolzens 7 führt. Das Spaltmaß ist folglich reduziert, was zu einem geringeren Schmutzeintrag führt.

Der aufgetragene Gleitlack 13 besteht in einer bevorzugten Ausführungsform aus einer über einen Wärmeeintrag aushärtbaren Matrix sowie als Schmierstoff zugesetzten Polytetrafluorethylenpartikeln und als Verschleißschutzstoff zugesetzten, mit einer Silanisierung in ihrer Oberfläche modifizierten Siliciumnitridpartikeln.

## Patentansprüche

1. Transportvorrichtung, insbesondere für eine Pressvorrichtung zur Herstellung von Spanplatten, umfassend eine Anzahl an Tragrollen, wobei jede Tragrolle an zwei Bolzen, die in Halterungen der Transportvorrichtung fixiert sind und in jeweils eine an den Stirnseiten der Tragrollen vorgesehene sacklochartige Bohrung eingreifen, über eine Gleitlagerung mit rollen- und bolzenseitig vorgesehenen Laufflächen drehgelagert ist, wobei die tragrollenseitigen und/oder bolzenseitigen Laufflächen (11, 12) komplett mit einem Gleitlack (13) beschichtet sind, **dadurch gekennzeichnet, dass** am Bolzen (7) eine erste Fase (14) im Bereich seines freien Endes vorgesehen ist, und/oder am Bolzen (7) eine zweite Fase (15) im Bereich des aus der sacklochartigen Bohrung (10) der Tragrolle (3) herausragenden Bolzenabschnitts vorgesehen ist, und/oder an der Tragrolle (3) im Eingangsbereich der sacklochartigen Bohrung (10) eine Fase (17) vorgesehen ist, wobei die jeweilige Fase ebenfalls zumindest abschnittsweise mit Gleitlack beschichtet ist.

2. Transportvorrichtung nach Anspruch 1, **dadurch gekennzeichnet, dass** sowohl die erste Fase (14) als auch die zweite Fase (15) vorgesehen sind, die jeweils mit Gleitlack beschichtet sind.

3. Transportvorrichtung nach Anspruch 1, **dadurch gekennzeichnet, dass** die zweite Fase (15) und die an der Tragrolle (3) vorgesehene Fase (17), die entgegengesetzt zur zweiten Fase (15) verläuft, vorgesehen sind, die jeweils mit Gleitlack beschichtet sind.

4. Transportvorrichtung nach Anspruch 1, **dadurch gekennzeichnet, dass** sowohl die erste Fase (14) als auch die an der Tragrolle (3) vorgesehene Fase (17) vorgesehen ist, die jeweils mit Gleitlack beschichtet sind.

5. Transportvorrichtung nach Anspruch 1, **dadurch gekennzeichnet, dass** sowohl die erste Fase (14) als auch die zweite Fase (15) als auch die an der Transportrolle vorgesehene Fase (17) vorgesehen sind und jede Fase mit Gleitlack beschichtet ist.

6. Transportvorrichtung, nach einem der vorangehenden Ansprüche, **dadurch gekennzeichnet, dass** die Schichtdicke des Gleitlacks (13) im Bereich von 10 bis 300 µm, vorzugsweise bei 25 - 75 µm, insbesondere bei 50 µm, liegt.

7. Transportvorrichtung nach einem der vorangehenden Ansprüche, **dadurch gekennzeichnet, dass** die bolzenseitigen Laufflächen (12) an Bolzenabschnitten mit einem vergrößerten Bolzendurchmesser vorgesehen sind.

8. Transportvorrichtung nach einem der vorangehenden Ansprüche, **dadurch gekennzeichnet, dass** der Fasenwinkel im Bereich von 2 bis 10°, vorzugsweise bei 5°, liegt.

9. Transportvorrichtung nach einem der vorangehenden Ansprüche, **dadurch gekennzeichnet, dass** die Übergänge der Fasen (14, 15) am Bolzen (7) mit einem Radius von 20 bis 40 mm, vorzugsweise 30 mm, gewölbt ausgeformt sind.

10. Transportvorrichtung nach einem der vorangehenden Ansprüche, **dadurch gekennzeichnet, dass** die Oberfläche der Bohrungen der Tragrollen (3) einen Rauhigkeitswert Ra von 0,1 bis 10 µm, vorzugsweise weniger als 4 µm, aufweist.

11. Transportvorrichtung nach einem der vorangehenden Ansprüche, **dadurch gekennzeichnet, dass** die Halterungen (8) der Transportvorrichtung (1) starr an einem Rahmengestell oder an einem umlaufenden Fördermittel (9), insbesondere einer Kette, vorgesehen sind.

12. Transportvorrichtung nach einem der vorangehenden Ansprüche, **dadurch gekennzeichnet, dass** die Bolzen (7) und die Tragrollen (3) je aus einem metallischen Werkstoff bestehen.

## Claims

1. Conveying device, in particular for a pressing device for the production of chipboards, comprising a number of support rollers, wherein each support roller is rotatably mounted on two pintles via a sliding-contact bearing comprising roller-side and pintle-side running surfaces, said pintles being fixed in mountings of the conveying device and each engaging in a respective blind-hole bore provided at the ends of the support rollers, and wherein the support roller-side and/or pintle-side running surfaces (11, 12) are completely coated with an anti-friction varnish (13), **characterized in that** a first bevel (14) is provided on the pintle (7) in the region of its free end, and/or a second bevel (15) is provided on the pintle (7) in the region of the pintle portion that projects from the blind-hole bore (10) of the support roller (3), and/or a bevel (17) is provided on the support roller (3) in the inlet region of the blind-hole bore (10), wherein the respective bevel is likewise at least partially coated with anti-friction varnish.

2. Conveying device according to Claim 1, **characterized in that** both the first bevel (14) and the second bevel (15) are provided and are each coated with anti-friction varnish.

3. Conveying device according to Claim 1, **characterized in that** the second bevel (15) and the bevel (17) provided on the support roller (3), which bevel extends oppositely to the second bevel (15), are provided and are each coated with anti-friction varnish.

4. Conveying device according to Claim 1, **characterized in that** both the first bevel (14) and the bevel (17) provided on the support roller (3) are provided and are each coated with anti-friction varnish.

5. Conveying device according to Claim 1, **characterized in that** not only the first bevel (14) but also the second bevel (15) and also the bevel (17) provided on the support roller are provided, and each bevel is coated with anti-friction varnish.

6. Conveying device according to one of the preceding claims, **characterized in that** the layer thickness of the anti-friction varnish (13) lies in the range from 10 to 300 µm, preferably being 25-75 µm, in particular 50 µm.

7. Conveying device according to one of the preceding claims, **characterized in that** the pintle-side running surfaces (12) are provided on pintle portions having an enlarged pintle diameter.

8. Conveying device according to one of the preceding claims, **characterized in that** the bevel angle lies in the range from 2 to 10°, preferably being 5°.

9. Conveying device according to one of the preceding claims, **characterized in that** the transition points of the bevels (14, 15) on the pintle (7) have a curved form with a radius of 20 to 40 mm, preferably 30 mm.

10. Conveying device according to one of the preceding claims, **characterized in that** the surface of the bores in the support rollers (3) has a roughness value Ra of 0.1 to 10 µm, preferably less than 4 µm.

11. Conveying device according to one of the preceding claims, **characterized in that** the mountings (8) of the conveying device (1) are rigidly provided on a framework or on a revolving conveying means (9), in particular a chain.

12. Conveying device according to one of the preceding claims, **characterized in that** the pintles (7) and the support rollers (3) are each made of a metallic material.

## Revendications

1. Dispositif de transport, en particulier pour un dispositif de pressage pour fabriquer des panneaux de particules, comprenant une pluralité de rouleaux de support, chaque rouleau de support étant monté à rotation, par le biais d'un support sur palier lisse avec des surfaces de roulement prévues du côté du rouleau de support et de l'axe, sur deux axes, qui sont fixés dans des fixations du dispositif de transport et qui viennent en prise dans un alésage de type trou borgne respectif prévu au niveau des côtés frontaux des rouleaux de support, les surfaces de roulement (11, 12) prévues du côté du rouleau de support et/ou de l'axe étant complètement revêtues d'un vernis de glissement (13), **caractérisé en ce qu'**un premier biseau (14) est prévu sur l'axe (7) dans la région de son extrémité libre, et/ou **en ce qu'**un deuxième biseau (15) est prévu sur l'axe (7) dans la région de la portion d'axe saillant hors de l'alésage de type trou borgne (10) du rouleau de support (3), et/ou un biseau (17) est prévu sur le rouleau de support (3) dans la région d'entrée de l'alésage de type trou borgne (10), le biseau respectif étant également revêtu au moins en partie d'un vernis de glissement.

2. Dispositif de transport selon la revendication 1, **caractérisé en ce que** le premier biseau (14) ainsi que le deuxième biseau (15) sont prévus et sont chacun revêtus de vernis de glissement.

3. Dispositif de transport selon la revendication 1, **caractérisé en ce que** le deuxième biseau (15) et le biseau (17) prévu sur le rouleau de support (3), qui s'étend à l'opposé du deuxième biseau (15), sont prévus et sont chacun revêtus de vernis de glissement.

4. Dispositif de transport selon la revendication 1, **caractérisé en ce que** le premier biseau (14) ainsi que le biseau (17) prévu sur le rouleau de support (3) sont prévus et sont chacun revêtus de vernis de glissement.

5. Dispositif de transport selon la revendication 1, **caractérisé en ce que** le premier biseau (14) ainsi que le deuxième biseau (15) et le biseau (17) prévu sur le rouleau de support sont prévus et chaque biseau est revêtu de vernis de glissement.

6. Dispositif de transport selon l'une quelconque des revendications précédentes, **caractérisé en ce que** l'épaisseur de couche du vernis de glissement (13) est de l'ordre de 10 à 300 µm, de préférence de 25 à 75 µm, notamment de 50 µm.

7. Dispositif de transport selon l'une quelconque des revendications précédentes, **caractérisé en ce que** les surfaces de roulement (12) du côté de l'axe sont prévues sur des portions d'axe ayant un diamètre d'axe agrandi.

8. Dispositif de transport selon l'une quelconque des revendications précédentes, **caractérisé en ce que** l'angle des biseaux est de l'ordre de 2 à 10°, de préférence de 5°.

9. Dispositif de transport selon l'une quelconque des revendications précédentes, **caractérisé en ce que** les transitions des biseaux (14, 15) sur l'axe (7) sont formées de manière courbée avec un rayon de 20 à 40 mm, de préférence de 30 mm.

10. Dispositif de transport selon l'une quelconque des revendications précédentes, **caractérisé en ce que** la surface des alésages des rouleaux de support (3) présente une valeur de rugosité Ra de 0,1 à 10 µm, de préférence inférieure à 4 µm.

11. Dispositif de transport selon l'une quelconque des revendications précédentes, **caractérisé en ce que** les fixations (8) du dispositif de transport (1) sont prévues de manière rigide sur un châssis ou sur un moyen de transport entraîné en rotation (9), notamment une chaîne.

12. Dispositif de transport selon l'une quelconque des revendications précédentes, **caractérisé en ce que** les axes (7) et les rouleaux de support (3) se composent chacun d'un matériau métallique.
